# EUROPEAN PATENT APPLICATION

(11) **EP 2 983 066 A1**
(43) Date of publication of application: **10.02.2016**
(21) Application number: 15172491.1
(22) Date of filing: 17.06.2015
(51) Int. Cl.: G06F 3/01

(54) **ELECTRONIC DEVICE AND MOVEMENT JUDGMENT METHOD**

(30) Priority: 06.08.2014 JP 2014160344
(71) Applicant: FUJITSU LIMITED, Kawasaki-shi, Kanagawa 211-8588 (JP)
(72) Inventor: NEGORO, Hiroshi, Kawasaki-shi, Kanagawa 211-8588 (JP); SUGIMOTO, Takanao, Kawasaki-shi, Kanagawa 211-8588 (JP)
(74) Representative: Fenlon, Christine Lesley

(57) **Abstract**

An electronic device includes a computer processor, the device includes a detection unit configured to detect magnetism that changes at a frequency higher than a first threshold; a first calculation unit configured to calculate a moving speed of the electronic device in a horizontal direction; and a judgment unit configured to judge that a user is moving when the calculated moving speed exceeds a second threshold and an amount of change in the detected magnetism exceeds a third threshold.

## Description

### FIELD

The embodiments discussed herein are related to a technique in a portable electronic device to identify a user state.

### BACKGROUND

Even while a user is moving, an electronic device carried by the user may perform various processes. Some of such processes are performed on the premise that a user is moving. Such use modes on the premise that a user is moving have not been conceived for stationary devices.

Some of portable electronic devices can calculate a moving speed at any time by using a built-in acceleration sensor. However, even if a calculated moving speed exceeds a predetermined threshold at or above which a user is to be judged as moving, the user is not typically moving.

On one hand, the information indicating that a user is moving is information specific to the portable electronic device. On the other hand, there are few techniques for enabling the portable electronic device to correctly judge that a user is moving.

In this connection, a portable electronic device may include a magnetic sensor configured to measure earth magnetism, in addition to an acceleration sensor. Measurement data outputted from the magnetic sensor is often used to identify orientation. Related technique is described in, for example, Japanese Laid-open Patent Publications No. 2007-127584, No. 2008-051587, and No. 05-107074.

It is desirable to more correctly identify a state where a user is moving.

### SUMMARY

According to an embodiment of one aspect of the invention, an electronic device includes a computer processor, the device includes a detection unit configured to detect magnetism that changes at a frequency higher than a first threshold; a first calculation unit configured to calculate a moving speed of the electronic device in a horizontal direction; and a judgment unit configured to judge that a user is moving when the calculated moving speed exceeds a second threshold and an amount of change in the detected magnetism exceeds a third threshold.

The object and advantages of the invention will be realized and attained by means of the elements and combinations particularly pointed out in the claims. It is to be understood that both the foregoing general description and the following detailed description are exemplary and explanatory and are not restrictive of the invention, as claimed.

In one aspect of the embodiment, it is possible to more correctly identify a state where a user is moving.

### BRIEF DESCRIPTION OF DRAWINGS

These and/or other aspects and advantages will become apparent and more readily appreciated from the following description of the embodiments, taken in conjunction, by way of example only, with the accompanying drawing of which:
FIG. 1 is a view illustrating a first example of a moving state;
FIG. 2 is a view illustrating a first example of a stationary state;
FIG. 3 is a view illustrating a second example of a moving state;
FIG. 4 is a view illustrating a second example of a stationary state;
FIG. 5 is a view schematically illustrating a change in a magnetic component due to electromagnetic wave;
FIG. 6 is a view schematically illustrating a change in magnetism;
FIG. 7 is a view schematically illustrating frequency distribution;
FIG. 8 is a view schematically illustrating frequency distribution;
FIG. 9 is a view schematically illustrating a change in magnetism;
FIG. 10 is a view schematically illustrating frequency distribution;
FIG. 11 is a view illustrating a hardware configuration example of a portable terminal unit;
FIG. 12 is a view illustrating a microcontroller configuration example;
FIG. 13 is a view illustrating a module configuration example of a discriminant unit;
FIG. 14 is a view illustrating a main process flow in the discriminant unit;
FIG. 15 is a view illustrating an example of detection process flow;
FIG. 16 is a view illustrating an example of calculation process flow;
FIG. 17 is a view illustrating an example of judgment process flow;
FIG. 18 is a view illustrating an example of judgment result data;
FIG. 19 is a view illustrating an example of notification process flow;
FIG. 20 is a view illustrating a module configuration example of a first application unit;
FIG. 21 is a view illustrating an example of first application process flow;
FIG. 22 is a view illustrating an example of second application process flow;
FIG. 23 is a view illustrating a module configuration example of a second application unit;
FIG. 24 is a view illustrating an example of third application process flow; and
FIG. 25 is a view illustrating an example of fourth application process flow.

### DESCRIPTION OF EMBODIMENTS

### [Embodiment 1]

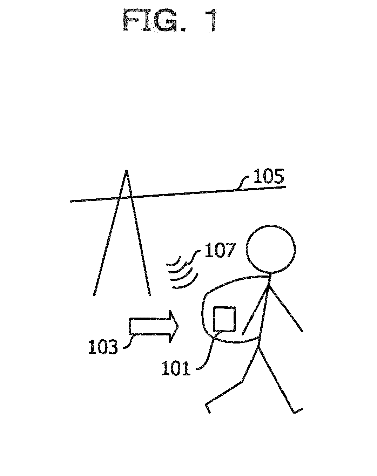

FIG. 1 illustrates a first example of a moving state. FIG. 1 illustrates a state where a user is walking. A portable terminal unit 101 is contained in a bag the user carries on his/her back. Thus, as the user moves, the portable terminal unit 101 also moves. Equipped with an acceleration sensor, the portable terminal unit 101 calculates a moving speed in a horizontal direction based on acceleration data measured by the acceleration sensor. In other words, the portable terminal unit 101 uses the acceleration sensor to measure a moving speed in the horizontal direction. An arrow 103 schematically depicts the moving speed in the horizontal direction measured by the portable terminal unit 101. When the user is walking, the moving speed in the horizontal direction measured by the portable terminal unit 101 is larger than a predetermined threshold.

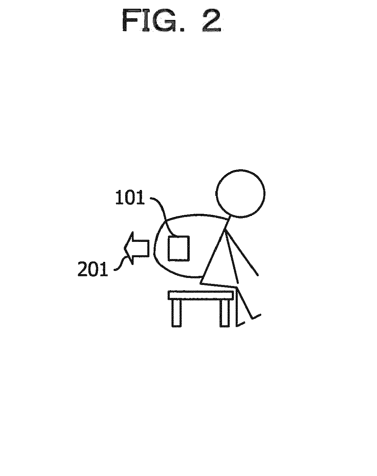

FIG. 2 illustrates a first example of a stationary state. FIG. 2 illustrates a state where a user sits on a bench. Similar to the case in FIG. 1, the portable terminal unit 101 is contained in a bag the user carries on his/her back. An arrow 201 schematically depicts a moving speed in the horizontal direction measured by the portable terminal unit 101. When the user is stationary, as illustrated in this example, the moving speed in the horizontal direction measured by the portable terminal unit 101 is smaller than a predetermined threshold.

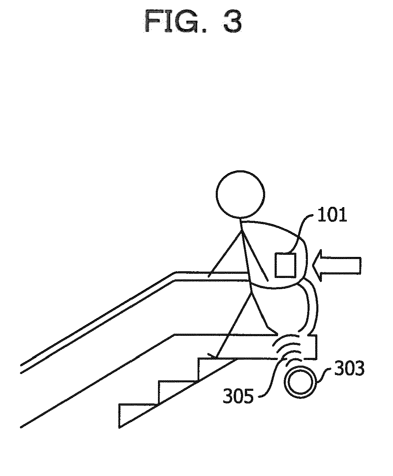

FIG. 3 illustrates a second example of a moving state. FIG. 3 illustrates a state where a user is on an escalator. Similar to the cases in FIG. 1 and FIG. 2, the portable terminal unit 101 is contained in a bag the user carries on his/her back. An arrow 301 schematically depicts a moving speed in the horizontal direction measured by the portable terminal unit 101. When the user is on the escalator, the moving speed in the horizontal direction measured by the portable terminal unit 101 is larger than a predetermined threshold.

In the examples illustrated in FIG. 1 to FIG. 3, the state where the user is moving (hereinafter referred to as a moving state) and the state where the user is stationary (hereinafter referred to as a stationary state) are discriminated from each other by the moving speed in the horizontal direction measured by the portable terminal unit 101. However, even when the portable terminal unit 101 detects a moving speed in the horizontal direction which is larger than the predetermined threshold, the user may be actually in the stationary state.

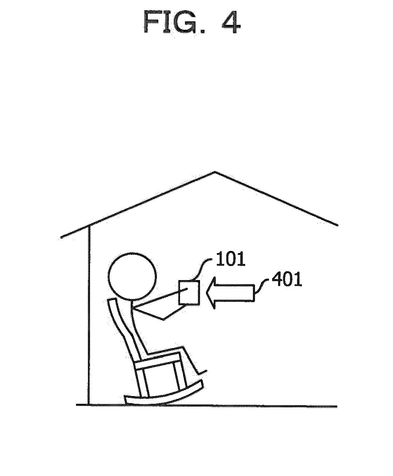

FIG. 4 illustrates a second example of a stationary state. FIG. 4 illustrates a state where a user holds the portable terminal unit 101 in a rocking chair. Due to swing of the rocking chair, the upper body of the user periodically swings back and forth. Accordingly, the portable terminal unit 101 held by the user also swings back and forth. Furthermore, an attitude angle of the portable terminal unit 101 also varies periodically. An arrow 401 schematically depicts a moving speed in the horizontal direction measured by the portable terminal unit 101. When the user is swinging in the rocking chair, the moving speed in the horizontal direction measured by the portable terminal unit 101 is larger than a predetermined threshold.

In the case of FIG. 4, although the user does not move actually, the measurement result is same as the case in which the user is moving. Therefore, an attempt to determine a user's state only with a moving speed in the horizontal direction results in an erroneous determination. This embodiment avoids such an erroneous determination. In the following, as illustrated in FIG. 1, FIG. 3, and FIG. 4, a case in which the moving speed in the horizontal direction is larger than the predetermined threshold is described.

The portable terminal unit 101 in this embodiment further includes an earth magnetism sensor to measure an amount of change in magnetism. The portable terminal unit 101 illustrated in FIG. 1 is configured to detect an amount of change in magnetism based on a magnetic component of electromagnetic wave emitted from a power transmission line 105. Wave patterns 107 schematically depict the magnetic component of electromagnetic wave emitted from the power transmission line 105.

The portable terminal unit 101 illustrated in FIG. 3 is configured to detect an amount of change in magnetism based on a magnetic component of electromagnetic wave emitted from a motor 303 that drives the escalator. Wave patterns 305 schematically depict the magnetic component of electromagnetic wave emitted from the motor 303. As illustrated in FIG. 1 and FIG. 3, the portable terminal unit 101 is often susceptible to magnetism due to electromagnetic wave in a town.

In the case of FIG. 4, as the rocking chair swings, the attitude angle of the portable terminal unit 101 also varies periodically. Therefore, orientation of the earth magnetism sensor of the portable terminal unit 101 also varies periodically. Then, magnetic flux density according to the earth magnetism measured by the earth magnetism sensor also varies periodically. Therefore, also in FIG. 4, the portable terminal unit 101 detects a change in magnetism.

In this embodiment, a focus is placed on a difference in frequencies to distinguish a change in magnetism due to electromagnetic wave when the user is actually moving as in FIG. 1 and FIG. 3 from a change in earth magnetism caused by a change in the attitude angle of the portable terminal unit 101 as in FIG. 4. A frequency in the change of magnetism detected in the cases of FIG. 1 and FIG. 3 is higher than a frequency in the change of magnetism detected in the case of FIG. 4.

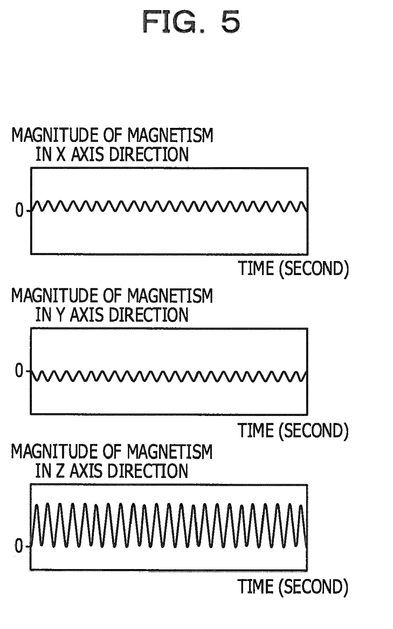

FIG. 5 schematically illustrates a change in a magnetic component due to electromagnetic wave as illustratively illustrated in FIG. 1 and FIG. 3. This example illustrates magnitude of magnetism expected to be measured in three directions of an X axis, a Y axis, and a Z axis. Note that these three axes are orthogonal to each other. An upper-column graph illustrates a relation of magnitude of magnetism expected to be measured in the X-axis direction and time. A middle-column graph illustrates a relation of magnitude of magnetism expected to be measured in the Y-axis direction and time. A lower-column graph illustrates a relation of magnitude of magnetism expected to be measured in the Z-axis direction and time. Any graph illustrates time in the horizontal axis direction and magnitude of magnetism in the vertical axis direction. In FIG. 5, magnetism varies in a short cycle.

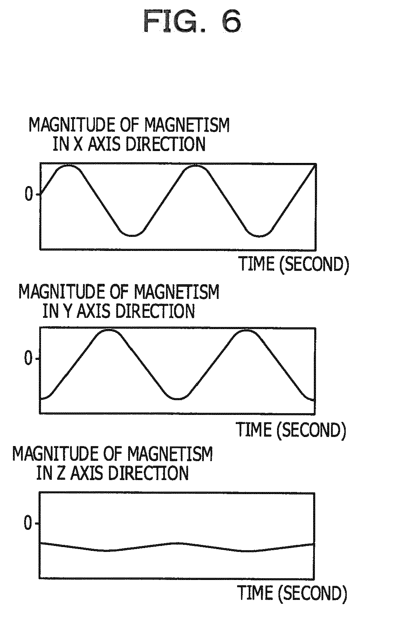

FIG. 6 schematically illustrates a change in magnetism measured in a situation in which an attitude angle of the portable terminal unit 101 changes depending on handling of the user, as illustratively illustrated in FIG. 4. Similar to the case in FIG. 5, an upper-column graph illustrates a relation of magnitude of magnetism expected to be measured in the X-axis direction and time. A middle-column graph similarly illustrates a relation of magnitude of magnetism expected to be measured in the Y-axis direction and time. A lower-column graph similarly illustrates a relation of magnitude of magnetism expected to be measured in the Z-axis direction and time. Also in the case of FIG. 6, time is depicted in the horizontal axis direction, and magnitude of magnetism in the vertical axis direction. A cycle of magnetism change due to change in attitude angle of the portable terminal unit 101 associated with handling of the user is longer than the cycle in the magnetic component of electromagnetic wave.

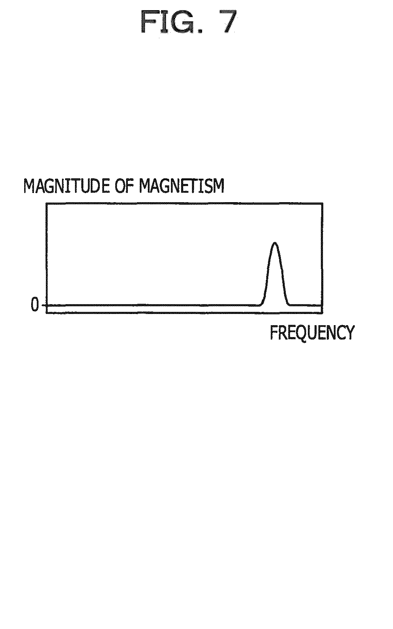

FIG. 7 schematically illustrates frequency distribution in the case of FIG. 5. The horizontal axis depicts a frequency and the vertical axis magnitude of magnetism. In FIG. 5, large magnetism appears at higher frequencies than a predetermined threshold.

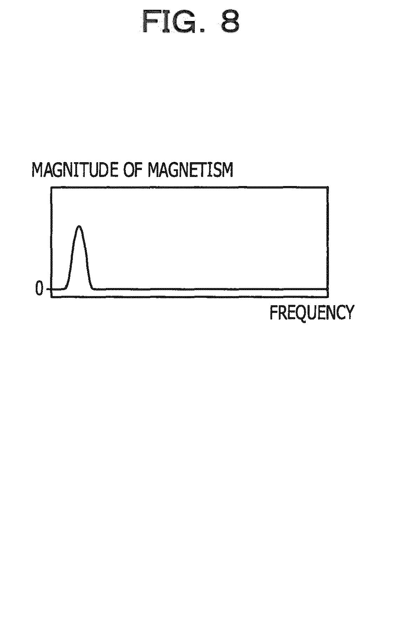

FIG. 8 schematically illustrates frequency distribution in the case of FIG. 6. Similar to FIG. 7, the horizontal axis depicts a frequency and the vertical axis magnitude of magnetism. In FIG. 6, large magnetism appears at low frequencies.

In this manner, if focus is placed on frequencies at which large magnetism appears, for example, the moving state illustrated in FIG. 1 and FIG. 3 may be discriminated from the stationary state illustrated in FIG. 4. This embodiment makes it easier to discriminate between the moving state and the stationary state by removing a magnetic component at frequencies lower than a predetermined threshold and detecting a magnetic component at frequencies higher than the predetermined threshold.

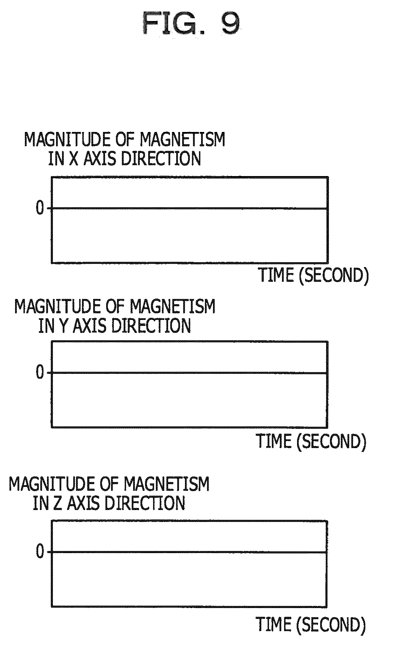

FIG. 9 illustrates an example in which low-frequency components are removed from the change in magnetism illustrated in FIG. 6. Similar to the cases in FIG. 5 and FIG. 6, an upper-column graph illustrates a relation of magnitude of magnetism expected to be measured in the X-axis direction and time. A middle-column graph similarly illustrates a relation of magnitude of magnetism expected to be measured in the Y-axis direction and time. A lower-column graph similarly illustrates a relation of magnitude of magnetism expected to be measured in the Z-axis direction and time. Also in the case of FIG. 6, time is depicted in the horizontal axis direction, and magnitude of magnetism in the vertical axis direction. In any axis direction, if low-frequency components are removed, a change in the magnetism may not be seen.

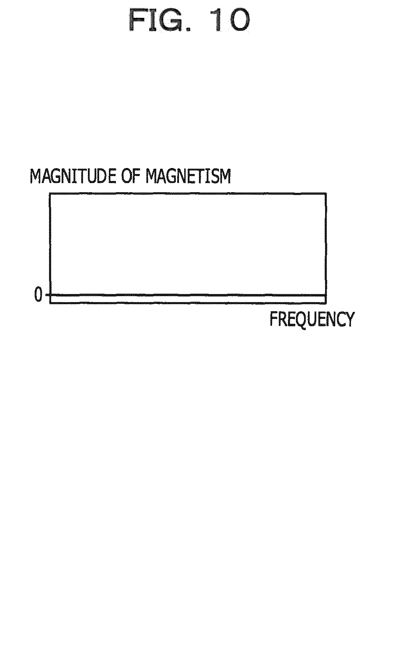

FIG. 10 schematically illustrates frequency distribution in the case of FIG. 9. Similar to FIG. 7 and FIG. 8, the horizontal axis depicts a frequency and the vertical axis magnitude of magnetism. Since the low-frequency components are removed, no large magnetism appears in any frequency in FIG. 10. As described above, any component derived from earth magnetism is removed.

For example, if low-frequency components are removed as described above when there is magnetism of a steel material used in a structure, such as residual magnetism, components derived from the residual magnetism are also removed.

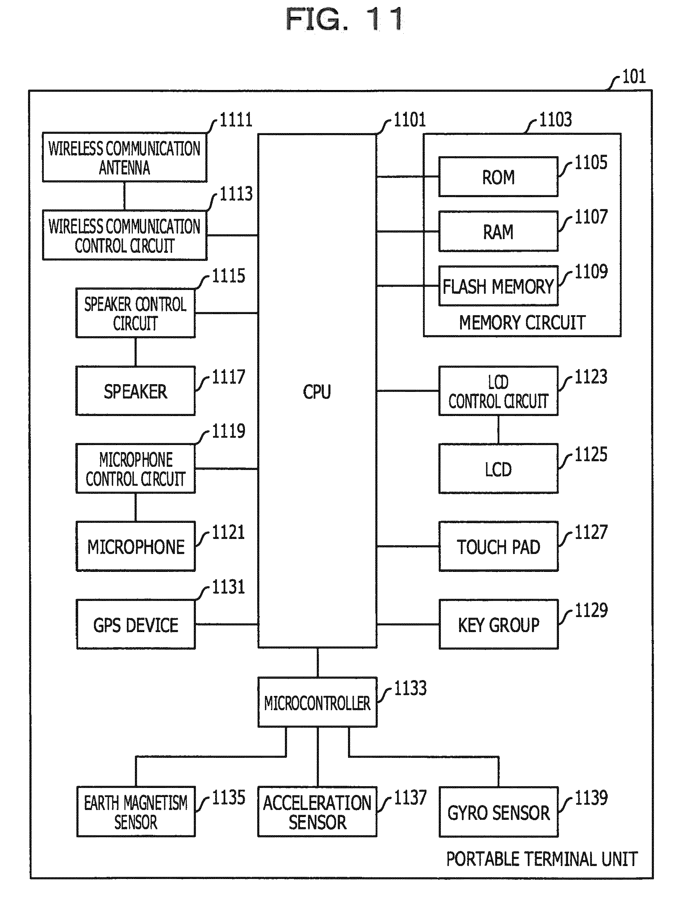

Then, a hardware configuration of the portable terminal unit 101 in this embodiment is described. FIG. 11 illustrates a hardware configuration example of the portable terminal unit 101. The portable terminal unit 101 has a central processing unit (CPU) 1101, a memory circuit 1103, a wireless communication antenna 1111, a wireless communication control circuit 1113, a speaker control circuit 1115, a speaker 1117, a microphone control circuit 1119, a microphone 1121, a liquid crystal display (LCD) control circuit 1123, an LCD 1125, a touch pad 1127, a key group 1129, a Global Positioning System (GPS) 1131, a microcontroller 1133, an earth magnetism sensor 1135, an acceleration sensor 1137, and a gyro sensor 1139.

The CPU 1101 may consist of a modem CPU and an application CPU. The memory circuit 1103 has, for example, a read only memory (ROM) 1105, a random access memory (RAM) 1107, and a flash memory 1109. The ROM 1105 stores, for example, a program such as an operating system or preset data. The RAM 1107 includes an area to deploy a program such as an application, for example. The RAM 1107 also includes an area to store temporary data. The flash memory 1109 stores, for example, a program such as an application or data to be retained.

The LCD control circuit 1123 causes a clock circuit to operate and an LCD 1125 to drive at a specified operating frequency. The LCD 1125 displays a display screen. The touch pad 1127 is, for example, a panel-shaped sensor arranged on the display screen of the LCD 1125 and configured to receive an instruction by touch manipulation. Specifically, the touch pad is used as a touch panel in which the LCD 1125 and the touch pad 1127 are integral. Each hard key of the key group 1129 is provided in a part of a housing.

The wireless communication antenna 1111 receives radio wave of cellular system, a wireless local area network (LAN) system, a short range communication system, for example. The wireless communication control circuit 1113 controls wireless communications depending on a use frequency of each system. Through control of wireless communications, audio communications of a telephone or data communications via an Internee, for example, are performed.

The speaker control circuit 1115 performs digital/analog conversion on sound data. The speaker 1117 outputs analog data as sound. The microphone control circuit 1119 performs analog/digital conversion of the sound data. The microphone 1121 converts sound to analog data.

The microcontroller 1133 is connected to the CPU 1101. The earth magnetism sensor 1135, the acceleration sensor 1137, and the gyro sensor 1139 are connected to the microcontroller 1133. The microcontroller 1133 controls the earth magnetism sensor 1135, the acceleration sensor 1137, and the gyro sensor 1139. The earth magnetism sensor 1135 measures a magnetic component including earth magnetism. In this example, the earth magnetism sensor 1135 measures a magnetic component in each direction of the orthogonal three axes. The acceleration sensor 1137 measures acceleration. In this example, the acceleration sensor 1137 measures acceleration in each direction of the three orthogonal axes. The gyro sensor 1139 detects attitude of the portable terminal unit 101. In this example, the gyro sensor 1139 measures angle of inclination in each direction of the three orthogonal axes. The acceleration sensor 1137 and the gyro sensor 1139 further detect a direction of gravitational force.

In this example, the CPU 1101 acquires measurement results of the earth magnetism sensor 1135, the acceleration sensor 1137, and the gyro sensor 1139 via the microcontroller 1133. However, the earth magnetism sensor 1135, the acceleration sensor 1137, and the gyro sensor 1139 may be connected to the CPU 1101. Then, the CPU 1101 may directly acquire measurement results of the earth magnetism sensor 1135, the acceleration sensor 1137, and the gyro sensor 1139.

Note that the portable terminal unit 101 illustrated in FIG. 11 is a mobile phone (including a feature phone and a smart phone), and an example of a portable electronic device. However, this embodiment may be applied to other electronic devices. For example, a module similar to the portable terminal unit 101 may be provided to perform processes to be described below, in a portable electronic device such as a wearable terminal of a watch or glass type, a tablet terminal, a game console, a pedometer, a sound recording machine, a music reproduction player, a camera, an image reproduction machine, a television broadcast receiver, a radio broadcast receiver, a controller, an electronic watch, an electronic dictionary, an electronic translator, a radio, a GPS transmitter, a measuring instrument, a health assistance device or a medical device.

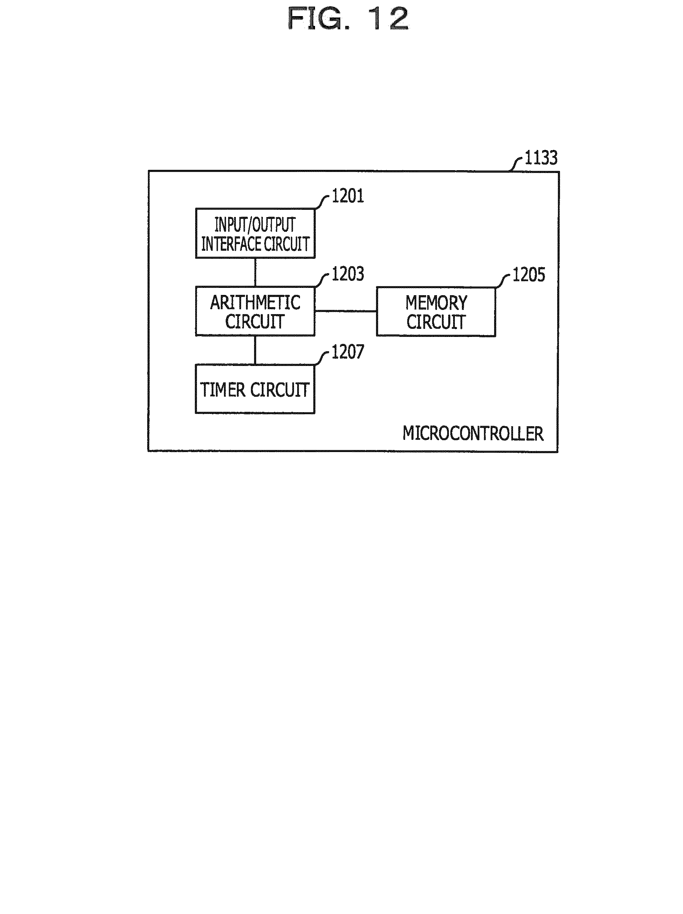

FIG. 12 illustrates a configuration example of the microcontroller 1133. The microcontroller 1133 has an input/output interface circuit 1201, an arithmetic circuit 1203, a memory circuit 1205, and a timer circuit 1207.

The input/output interface circuit 1201 outputs a measurement instruction to the earth magnetism sensor 1135, the acceleration sensor 1137, and the gyro sensor 1139. In addition, the input/output interface circuit 1201 inputs magnetic data measured by the earth magnetism sensor 1135, acceleration data measured by the acceleration sensor 1137, and attitude data measured by the gyro sensor 1139. The input/output interface circuit 1201 further may send data (instruction or notice, for example) to the CPU 1101 and receive data (instruction or notice, for example) from the CPU 1101.

The input/output interface circuit 1201 is connected to the arithmetic circuit 1203. The arithmetic circuit 1203 is also connected to the memory circuit 1205 and the timer circuit 1207. The arithmetic circuit 1203 performs an arithmetic process. The memory circuit 1205 stores data. The memory circuit 1205 includes a volatile memory or a non-volatile memory, for example. The timer circuit 1207 measures time and elapsed time.

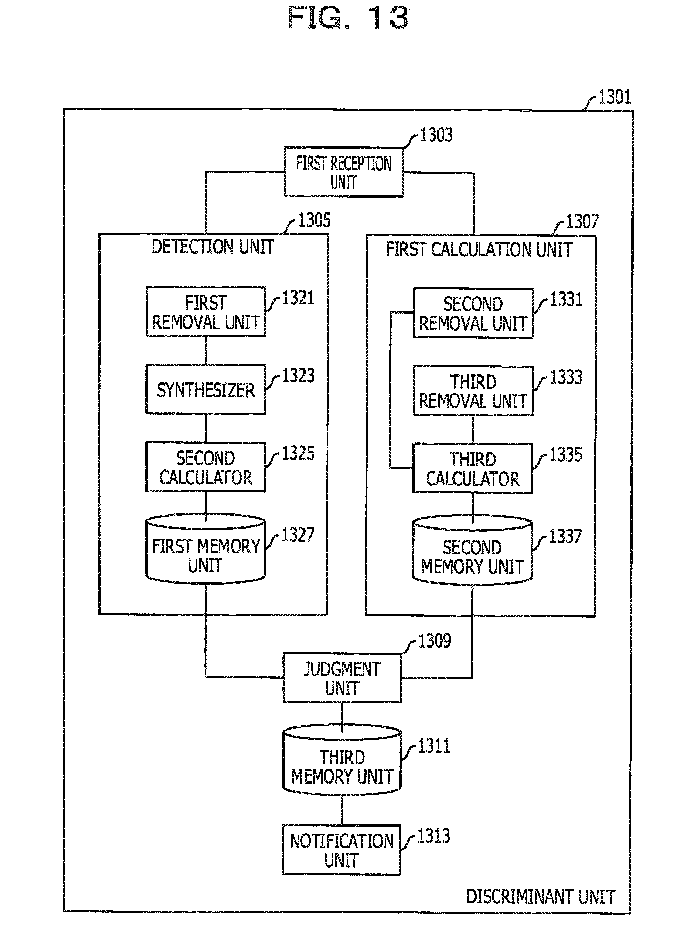

FIG. 13 illustrates a module configuration example of a discriminant unit 1301. The discriminant unit 1301 is configured to discriminate between a moving state and a stationary state. In this example, the discriminant unit 1301 is implemented by processing in the microcontroller 1133. However, the discriminant unit 1301 may also be implemented by processing in the CPU 1101.

The discriminant unit 1301 has a first reception unit 1303, a detection unit 1305, a first calculation unit 1307, a judgment unit 1309, a third memory unit 1311, a notification unit 1313. The first reception unit 1303 is configured to receive earth magnetism data from the earth magnetism sensor 1135. When receiving the earth magnetism data, the first reception unit 1303 hands the received earth magnetism data to the detection unit 1305. The first reception unit 1303 is also configured to receive acceleration data from the acceleration sensor 1137. When receiving the acceleration data, the first reception unit 1303 hands the received acceleration data to the first calculation unit 1307. The detection unit 1305 is configured to detect an amount of change in magnetism from the received earth magnetism data. The first calculation unit 1307 is configured to calculate a moving speed in the horizontal direction from the received acceleration data. The judgment unit 1309 is configured to discriminate between a moving state and a stationary state based on the amount of change in magnetism and the moving speed in the horizontal direction. The third memory unit 1311 stores data on the judgment result by the judgment unit 1309. The notification unit 1313 notifies the CPU 1101 of the judgment result.

The detection unit 1305 has a first removal unit 1321, a synthesis unit 1323, a second calculation unit 1325, and a first memory unit 1327. The first removal unit 1321 is configured to remove a low-frequency component included in magnetic data. A low-frequency component is a component of a frequency equal to lower than a predetermined threshold. More specifically, the first removal unit 1321 is a high-pass filter. In this example, the first removal unit 1321 removes a low-frequency component from each of magnetic data in the X axis direction, magnetic data in the Y axis direction, and magnetic data in the Z-axis direction.

The synthesis unit 1323 is configured to synthesize the magnetic data in the X axis direction, the magnetic data in the Y axis direction, and the magnetic data in the Z axis direction from which each low-frequency component is removed. A three-axis synthesized value by the synthesis unit 1323 is calculated with a conventional method.

The second calculation unit 1325 is configured to integrate a synthesized value obtained from the synthesis unit 1323. In other words, the second calculation unit 1325 determines an integrated value of the synthesized value by leaving minute spacing to calculate a total sum of the synthesized values obtained from the synthesis unit 1323.

The first memory unit 1327 is configured to store a first parameter. The first parameter is an internal parameter to determine an integrated value of synthesized value.

The first calculation unit 1307 has a second removal unit 1331, a third removal unit 1333, a third calculation unit 1335, and a second memory unit 1337. The second removal unit 1331 is configured to remove a high-frequency component of acceleration data. A high-frequency component is a component of a frequency equal to or higher than a predetermined threshold. In this example, the second removal unit 1331 determines a gravitational force component by determining a frequency component equal to or lower than 0.1 Hz. In other words, the second removal unit 1331 is a low-pass filter.

The third removal unit 1333 is configured to extract a frequency component in a predetermined range from a lower threshold to an upper threshold. In other words, the third removal unit 1333 is a band-pass filter. The third removal unit 1333 in this example determines a movement component by extracting a frequency component from 1 Hz to 3 Hz. The range from 1 Hz to 3 Hz includes a frequency generated when a user walks, a frequency generated when the user runs, or a frequency when the user runs by bicycle. For example, any frequency component generated from knee shaking or by shaking the portable terminal unit 101 by hand is removed.

The third calculation unit 1335 is configured to derive an acceleration component in the horizontal direction by determining a cross product of the gravitational force component determined by the second removal unit 1331 and the movement component determined by the third removal unit 1333. In addition, the first calculation unit 1307 may calculate an acceleration component in the horizontal direction with other method. Then, the third calculation unit 1335 integrates the acceleration component in the horizontal direction to determine the moving speed in the horizontal direction.

The second memory unit 1337 is configured to store a second parameter. The second parameter is an internal parameter to determine an integrated value of an acceleration component in the horizontal direction.

The synthesized value obtained by leaving the minute spacing is totaled by the first parameter of the first memory unit 1327 to determine an amount of change in magnetism in a predetermined cycle. The acceleration component in the horizontal direction by leaving minute spacing is totaled by the second parameter of the second memory unit 1337 to determine a moving speed in the horizontal direction in the predetermined cycle. Then, using the amount of change in magnetism stored in the first memory unit 1327 and the moving speed in the horizontal direction stored in the second memory unit 1337, the judgment unit 1309 judges a moving state or a stationary state in the predetermined cycle.

The above mentioned discriminant unit 1301, the first reception unit 1303, the detection unit 1305, the first calculation unit 1307, the judgment unit 1309, the notification unit 1313, the first removal unit 1321, the synthesis unit 1323, the second calculation unit 1325, the second removal unit 1331, the third removal unit 1333, and the third calculation unit 1335 are implemented by using hardware resources (for example, FIG. 11 and FIG. 12) and a program causing the processor to perform processes described below.

The above described first memory unit 1327, the second memory unit 1337, and the third memory unit 1311 are implemented by using the hardware resources (for example, FIG. 11 and FIG. 12).

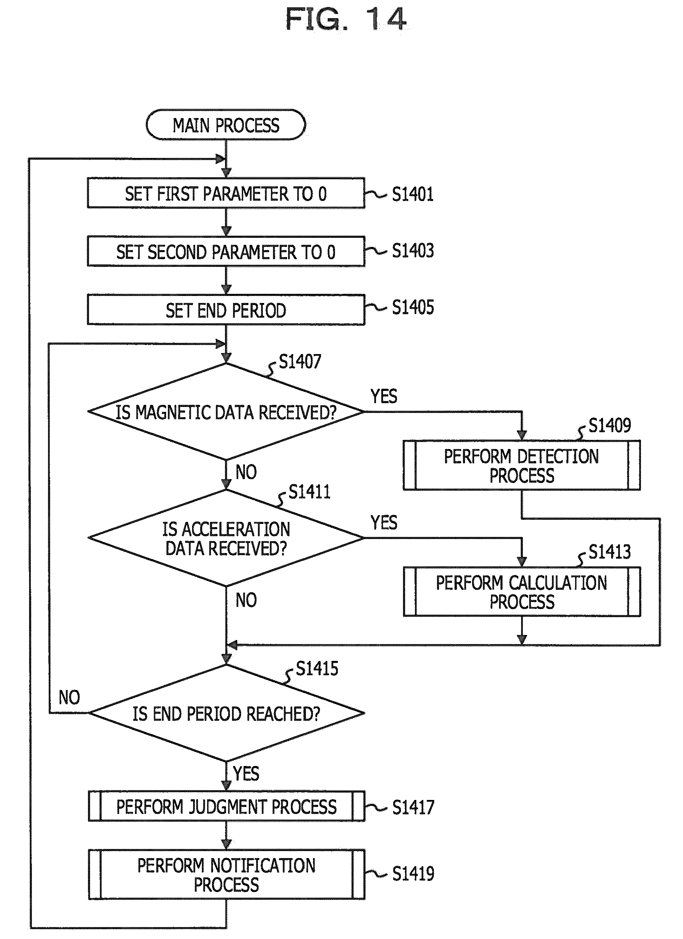

Then, main processing in the discriminant unit 1301 is described. FIG. 14 illustrates an example of main processing flow. The second calculation unit 1325 sets the first parameter stored in the first memory unit 1327 to 0 as an initial value (S1401). The third calculation unit 1335 sets a second parameter stored in the second memory unit 1337 to 0 as an initial value (S1403). The judgment unit 1309 sets a closing period of a cycle during which integration is performed (S1405). In other words, a closing period corresponds to termination of an integration interval in integration by minute time.

Then, the first reception unit 1303 judges whether or not magnetic data is received from the earth magnetism sensor 1135 (S1407). If the first reception unit 1303 judges that the magnetic data is received, the detection unit 1305 performs a detection process (S1409).

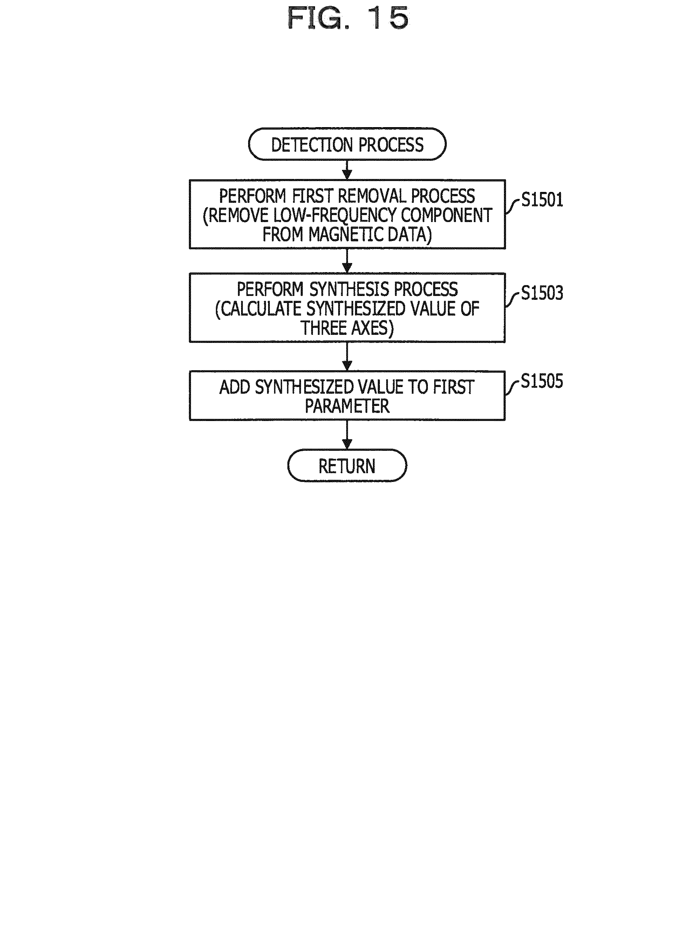

FIG. 15 illustrates an example of detection process flow. The first removal unit 1321 performs a first removal process (S1501). In the first removal process, the first removal unit 1321 removes a low-frequency component (frequency component of equal to or lower than 1 Hz, for example) included in magnetic data. By doing so, a frequency component derived from earth magnetism is removed. In this example, a low-frequency component is removed from each of the magnetic data in the X axis direction, the magnetic data in the Y axis direction, and magnetic data in the Z axis direction.

A threshold in the first removal process may be equal to or higher than a frequency of vibration in change in attitude of the portable terminal unit 101 accompanying swing associated with handling of a user (for example, swing of a rocking chair, shaking due to knee shaking, or swing due to hand shaking). In addition, the threshold in the first removal process may be a value lower than a frequency of a commercial power supply, for example. Furthermore, the threshold in the first removal process may be a value lower than a frequency of electromagnetic wave generated from an operating escalator.

Then, the synthesis unit 1323 performs a synthesis process (S1503). In the synthesis process, the synthesis unit 1323 synthesizes magnetic data in the X axis direction, the magnetic data in the Y axis direction, and the magnetic data in the Z axis direction from which low-frequency components are removed. In other words, the synthesis unit 1323 synthesizes a three-axis synthesized value. The second calculation unit 1325 adds the synthesized value obtained from the synthesis process to the first parameter stored in the first memory unit 1327 (S1505). Then, the process returns to S1415 illustrated in FIG. 14.

Now the description goes back to FIG. 14. When it is judged in S1407 that the magnetic data is not received, the first reception unit 1303 judges whether or not acceleration data is received from the acceleration sensor 1137 (S1411). If it is judged that the acceleration data is received, the first calculation unit 1307 performs a calculation process (S1413).

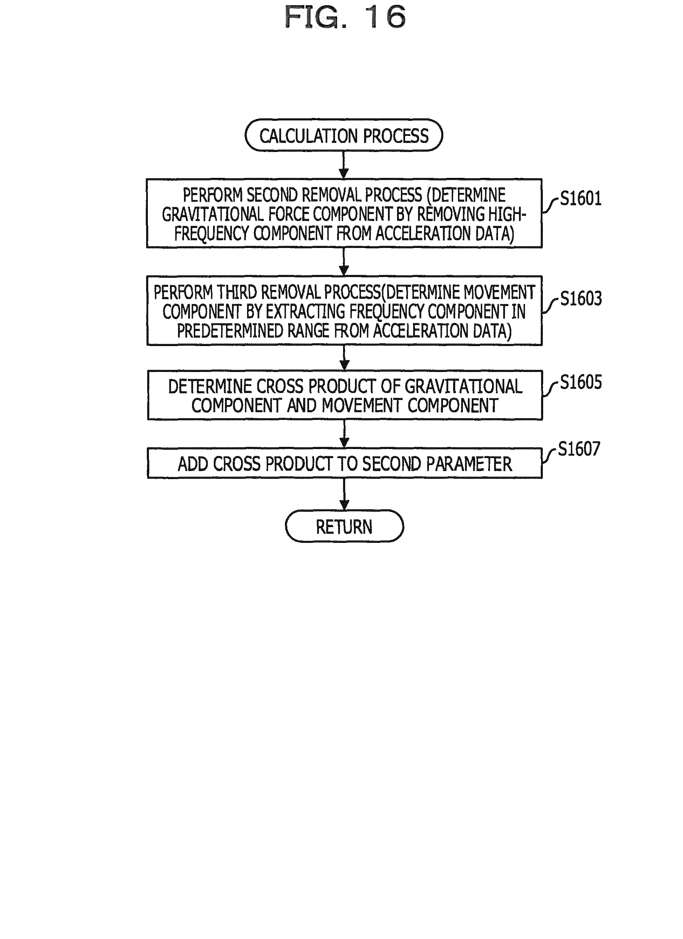

FIG. 16 illustrates an example of calculation process flow. The second removal unit 1331 performs a second removal process (S1601). In the second removal process, the second removal unit 1331 removes a high-frequency component from the received calculation data. In this example, the second removal unit 1331 determines a low-frequency component equal to or lower than 0.1 Hz, as described above. The acceleration having only the determined low-frequency component corresponds to a gravitational force component.

The third removal unit 1333 performs a third removal process (S1603). In the third removal process, the third removal unit 1333 extracts a frequency component in the predetermined range from the received acceleration data. In this example, the third removal unit 1333 determines a frequency component in the range from 1 Hz to 3 Hz, as described above. The acceleration having only the extracted frequency component corresponds to a movement component.

The third calculation unit 1335 determines a cross product of the frequency component (gravitational force component) determined in S1601 and the frequency component (movement component) determined in S1603, as described above (S1605). The cross product determined here corresponds to acceleration in the horizontal direction. Calculation of acceleration in the horizontal direction with a cross product is performed with a conventional method. The third calculation unit 1335 adds the cross product determined in S1605 to the second parameter stored in the second memory unit 1337 (S1607). Then, the process returns to S1415 illustrated in FIG. 14.

A description now goes back to FIG. 14. If it is judged in S1411 that the acceleration data is not received, the judgment unit 1309 judges whether or not a closing period is reached (S1415). If the judgment unit 1309 judges that the closing period is not reached, the process returns to S1407 and the process described above is repeated. On the one hand, if it is judged that the closing period is reached, the judgment unit 1309 performs a judgment process (S1417).

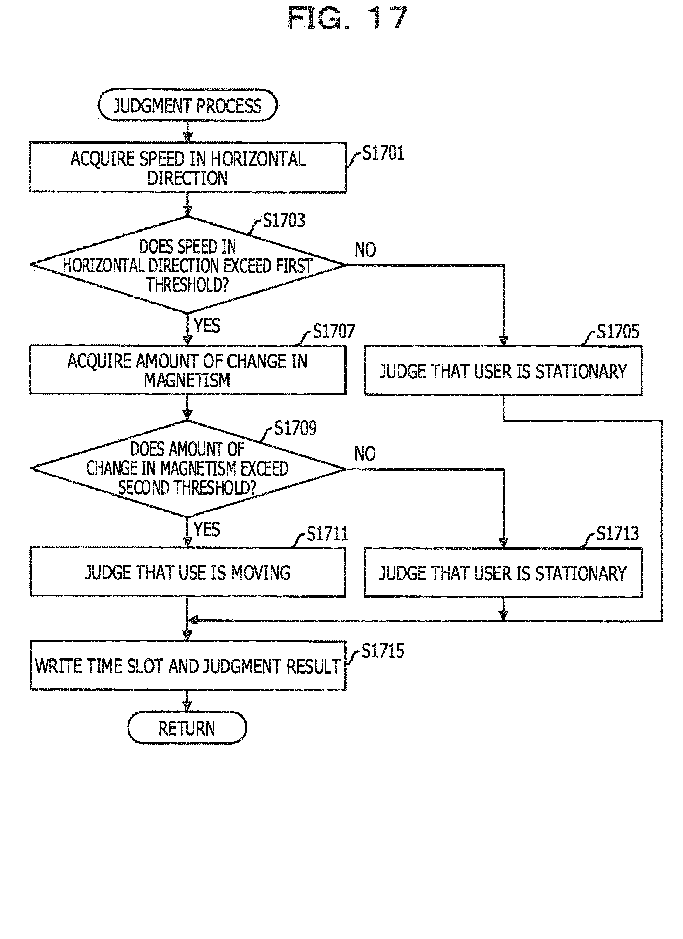

FIG. 17 illustrates an example of judgment process flow. The judgment unit 1309 acquires a speed in the horizontal direction from the second memory unit 1337 (S1701). The speed in the horizontal direction is a value of the second parameter in the closing period. Then, the judgment unit 1309 judges whether or not the speed in the horizontal direction exceeds a first threshold (S1703). The first threshold may represent a walking speed of a user at a slow pace, for example.

If it is judged that the speed in the horizontal direction is not exceeded, the judgment unit 1309 judges that the user is stationary (S1705). In the state illustrated in FIG. 2, for example, the user is judged as stationary in step S1705. The judgment unit 1309 writes a time slot of measurement and a judgment result in the third memory unit 1311 (S1715).

If it is judged in S1703 that the speed in the horizontal direction exceeds the first threshold, the judgment unit 1309 acquires an amount of change in magnetism from the first memory unit 1327 (S1707). The amount of change in magnetism is a value of the first parameter in the closing period. Then, the judgment unit 1309 judges whether or not the amount of change in magnetism exceeds the second threshold (S1709). If it is judged that the amount of change in magnetism exceeds the second threshold, the judgment unit 1309 judges that the user is moving (S1711). For example, in the state illustrated in FIG. 1 or FIG. 3, the user is judged as moving in S1711. The judgment unit 1309 writes down a time slot of measurement and a judgment result in the third memory unit 1311 (S1715).

On the one hand, in S1709, when the judgment unit 1309 judges that the amount of change in magnetism does not exceed the second threshold, the judgment unit 1309 judges the stationary state (S1713). For example, in the state illustrated in FIG. 4, the user is judged as stationary in S1713. The judgment unit 1309 writes down a time slot of measurement and a judgment result in the third memory unit 1311 (S1715). The process returns to S1419 illustrated in FIG. 14.

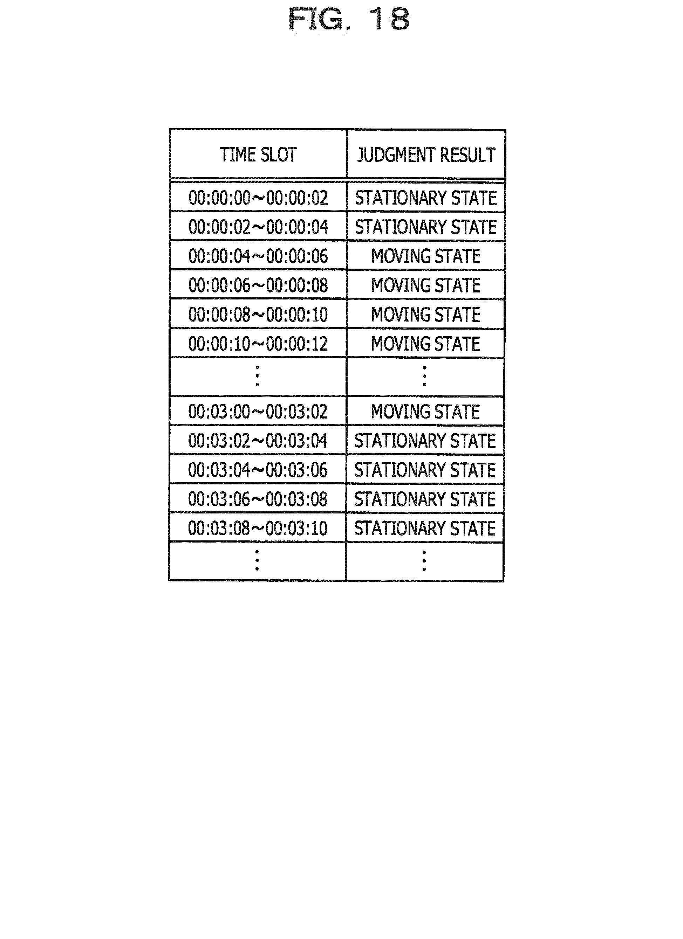

Here, judgment result data stored in the third memory unit 1311 is described. FIG. 18 illustrates an example of the judgment result data. In each record, the time slot of measurement is associated with the judgment result. A time slot is expressed in a format of hour:minute:second. In addition, in this example, the time slot corresponds to an integration interval in integration of a synthesized value and an integration interval in integration of acceleration in the horizontal direction.

A first record in this example indicates that a "stationary state" is judged by the measurement in the time slot of "00:00:00 to 00:00:02". Similarly, a second record indicates that the "stationary state" is judged by the measurement in the time slot of "00:00:02 to 00:00:04".

A third record indicates that a "moving state" is judged by the measurement in the time slot of "00:00:04 to 00:00:06". Similarly, a fourth record indicates that the "moving state" is judged by the measurement in the time slot of "00:00:06 to 00:00:08". Similarly, a fifth record indicates that the "moving state" is judged by the measurement in the time slot of "00:00:08 to 00:00:10". Similarly, a sixth record indicates that the "moving state" is judged by the measurement in the time slot of "00:00:10 to 00:00:12".

A seventh record excluding any omitted record indicates that the "moving state" is judged by the measurement in the time slot of "00:03:00 to 00:03:02".

An eighth record indicates that the "stationary state" is judged by the measurement in the time slot of "00:03:02 to 00:03:04". Similarly, a ninth record indicates the "stationary state" is judged by the measurement in the time slot of "00:03:04 to 00:03:06". Similarly, a tenth record indicates the "stationary state" is judged by the measurement in the time slot of "00:03:06 to 00:03:08". Similarly, an eleventh record indicates the "stationary state" is judged by the measurement in the time slot of "00:03:08 to 00:03:10".

A description goes back to FIG. 14. The notification unit 1313 performs a notification process (S1419). In this example, after switchover to a new state, the notification unit 1313 notifies the CPU 1101 of the new state when that state is repeated.

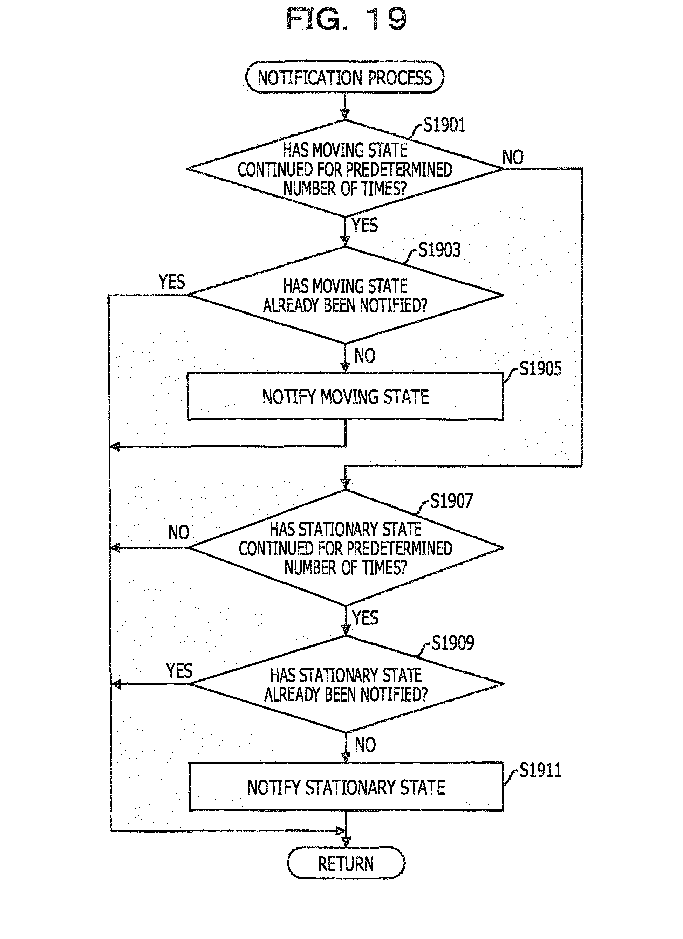

FIG. 19 illustrates an example of notification process flow. The notification unit 1313 traces back to sessions earlier than this session and judges whether or not the moving state has been judged in a predetermined number of consecutive sessions (S1901). When it is judged that the moving state has been judged in the predetermined number of consecutive sessions, the notification unit 1313 judges whether or not the moving state has already been notified (S1903). If it is judged that the moving state has not yet been notified, the notification unit 1313 notifies the CPU 1101 of the moving state (S1905).

If it is judged in S1903 that the moving state has already been notified, the notification ends directly.

If it is judged in step S1901 that the moving state has not continued for the predetermined number of times, the notification unit 1313 traces back to sessions earlier than this session and judges whether or not the stationary state has been judged in a predetermined number of consecutive sessions (S1907). If it is judged that the stationary state has been judged in the predetermined number of consecutive sessions, the notification unit 1313 judges whether or not the stationary state has already been notified (S1909). If it is judged that the stationary state has not yet been notified, the notification unit 1313 notifies the CPU 1101 of the stationary state (S1911).

In S1909, if it is judged that the stationary state has already been notified, the notification process directly ends.

In addition, if it is judged in S1907 that the stationary state has not been judged in the predetermined number of consecutive sessions, the notification process ends without any additional operations. When the notification process ends, the process returns to S1401 illustrated in FIG. 14. With the above, the description of the processing flow in this embodiment ends.

According to this embodiment, any effect of magnetism (earth magnetism, for example) detected as a component of a frequency lower than a predetermined threshold may be removed, and a state where a user is moving may be identified more correctly based on largeness of a change in magnetism received from the surroundings of the user.

Furthermore, any effect of magnetism (earth magnetism, for example) detected as the component of the frequency lower than the predetermined threshold may be removed, and a state where a user is stationary may be identified more correctly based on smallness of a change in magnetism received from the surroundings of the user.

Furthermore, since an amount of a change in magnetism is calculated after a low-frequency component is removed from magnetic data, an amount of change in magnetism due to a frequency higher than a predetermined threshold may be calculated relatively easily.

In addition, an earth magnetism component in normal use mode may be removed by detecting magnetism that changes at a frequency higher than a predetermined threshold equal to or higher than a frequency of vibration in attribute change of the portable terminal unit 101 associated with handling of a user. Therefore, erroneous judgment due to the effect of earth magnetism may be reduced.

Furthermore, since the magnetism detected is one that changes at a frequency higher than a predetermined threshold lower than a frequency of commercial power supply, a state where a user is moving may be judged based on the effect of electromagnetic wave generated from an electric power transmission line.

Furthermore, since magnetism is detected that changes at a frequency higher than a predetermined threshold lower than a frequency of electromagnetic wave generated from operating escalator, a state where a user is moving may be judged based on the effect of electromagnetic wave generated from the operating escalator.

In addition, since it is judged that a moving speed exceeds a predetermined threshold that represents a walking speed of a user at a slow pace, erroneous judgment on a state where the user is moving may be avoided for any movement slower than the walking speed of the user at slow pace.

[Embodiment 2]

In embodiments 2 to 5, application examples of identification results in the discriminant unit 1301 are described. In the embodiment 2, an example of controlling a device (for example, the GPS device 1131) based on an identification result is described.

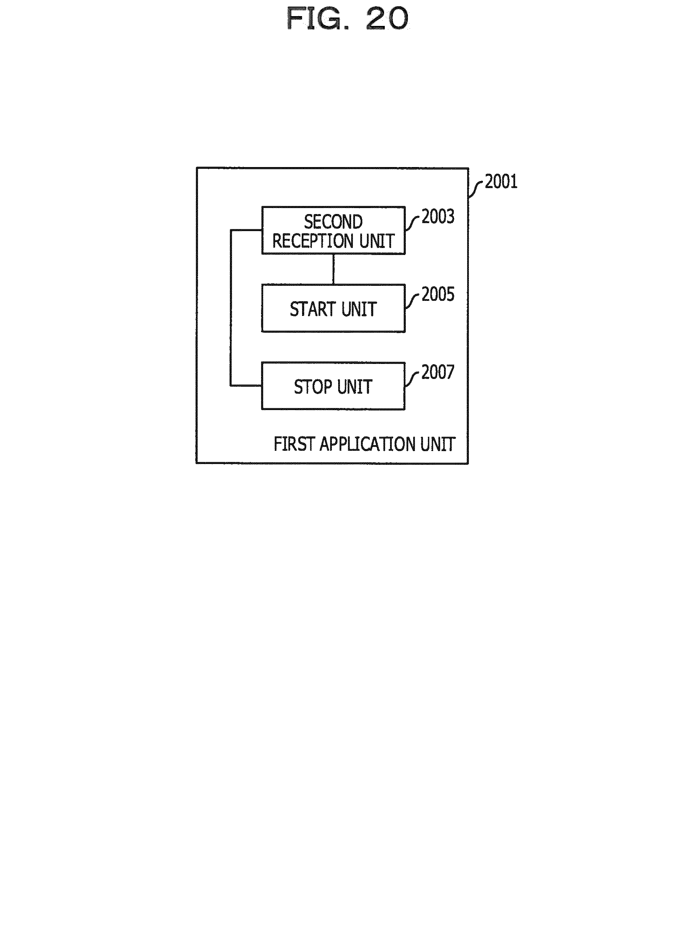

FIG. 20 illustrates a module configuration example of a first application unit 2001. The first application unit 2001 is implemented by a process in the CPU 1101. The first application unit 2001 causes a device to start or stop based on an identification result. The first application unit 2001 has a second reception unit 2003, a start unit 2005, and a stop unit 2007. The second reception unit 2003 receives a notice of a moving state or a notice of a stationary state from the notification unit 1313 of the discriminant unit 1301. When receiving a notice on the moving state, the start unit 2005 starts the device. When receiving a notice on the stationary state, the stop unit 2007 stops the device.

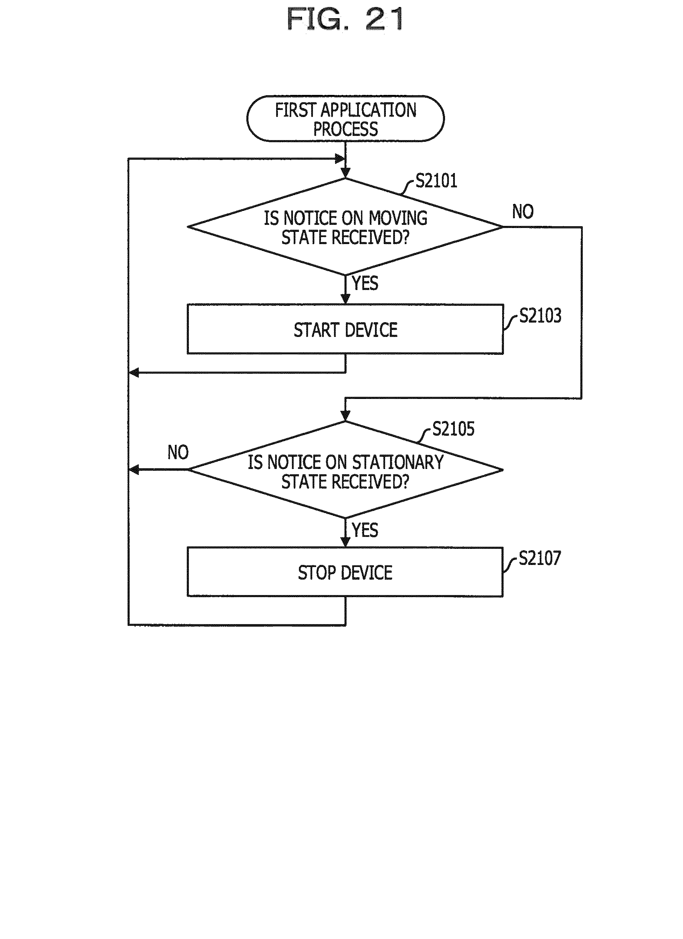

FIG. 21 illustrates an example of first application process flow. The second reception unit 2003 judges whether or not the notice on the moving state is received (S2101). If the second reception unit 2003 judges that the notice on the moving state is received, the start unit 2005 starts the device (S2103). Then, the process returns to S2101.

On the one hand, if the second reception unit 2003 judges in S2101 that the notice on the moving state is not received, the second reception unit 2003 judges whether or not the notice on the stationary state is received (S2105). If the second reception unit 2003 judges that the notice on the stationary state is received, the stop unit 2007 stops the device (S2107). Then, the process returns to S2101.

If it is judged in S2105 that the notice on the stationary state is not received, the process returns to S2101.

The example has been described above in which when the notice on the moving state is received, the start unit 2005 causes the device, and when the notice on the stationary state is received, the stop unit 2007 stops the device. However, the first application unit 2001 may be reversely controlled. In other words, when the notice on the stationary state is received, the start unit 2005 may start the device and when the notice on the moving state is received, the stop unit 2007 may stop the device.

According to this embodiment, for example, a device used in a moving state may be automatically started. Therefore, an operation to start the device used in a moving state may be omitted.

Furthermore, for example, a device not used in a stationary state may be automatically stopped. Therefore, an operation to stop the device not used in the stationary state may be omitted. In addition, power consumption due to the operation of the device may be controlled.

If control is reversed, a device used in the stationary state may be automatically started. Therefore, an operation to start the device used in the stationary state may be omitted.

Furthermore, a device not used in the moving state may be automatically stopped. Therefore, an operation to stop the device not used in the moving state may be omitted. In addition, the power consumption due to the operation of the device may be controlled.

### [Embodiment 3]

While the case in which the device is controlled based on the identification result is described in the embodiment 2, a case in which a program (for example, an application program) is controlled based on an identification result is described in the embodiment 3.

Also in this embodiment, the first application unit 2001 performs an application process. A configuration of the first application unit 2001 is as illustrated in FIG. 20. However, when receiving a notice on a moving state, the start unit 2005 starts a program. In addition, when receiving a notice on a stationary state, the stop unit 2007 stops the program.

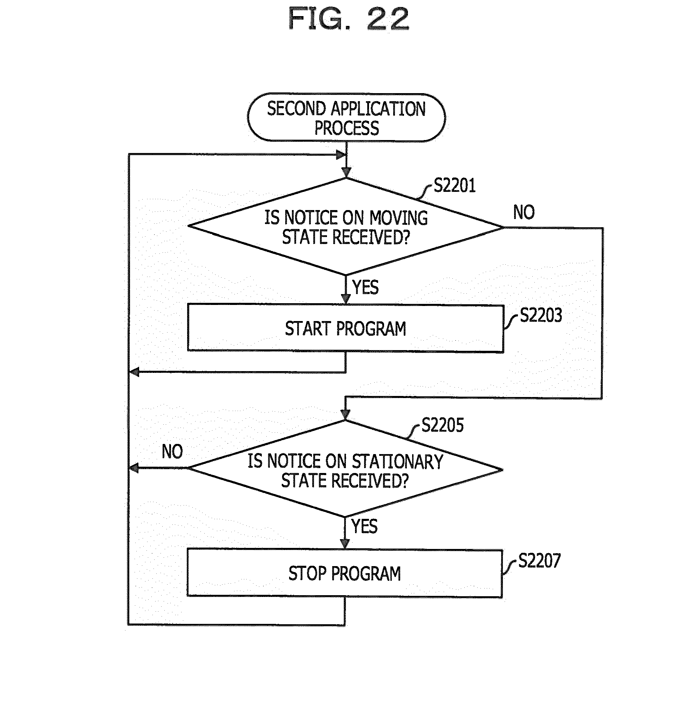

FIG. 22 illustrates an example of a second application process flow. The second reception unit 2003 judges whether or not the notice on the moving state is received (S2201). When it is judged that the notice on the moving state is received, the start unit 2005 starts the program (S2203). Then, the process returns to S2201.

On the one hand, if the second reception unit 2003 judges in S2201 that the notice on the moving state is not received, the second reception unit 2003 judges whether or not the notice on the stationary state is received (S2205). If it is judged that the notice on the stationary state is received, the stop unit 2007 stops the program (S2207). Then, the process returns to S2201.

If it is judged in S2205 that the notice on the stationary state is not received, the process returns to S2201.

The example is described above in which when the notice on the moving state is received, the start unit 2005 starts the program, and when the notice on the stationary state is received, the stop unit 2007 stops the program. However, the first application unit 2001 may reversely control. In other words, when the notice on the stationary state is received, the start unit 2005 may start the program, and when the notice on the moving state is received, the stop unit 2007 may stop the program.

According to the embodiment, for example, a program used in a moving state may be automatically started. Therefore, an operation to start the program used in the moving state may be omitted.

Furthermore, for example, a program not used in a stationary state may be automatically stopped. Therefore, an operation to stop the program not used in the stationary state may be omitted. In addition, power consumption due to execution of the program may be controlled.

If control is reversed, a program used in the stationary state may be automatically started. Therefore, an operation to start the program used in the stationary state may be omitted.

Furthermore, a program not used in the moving state may be automatically stopped. Therefore, an operation to stop the program not used in the moving state may be omitted. In addition, the power consumption due to execution of the program may be controlled.

### [Embodiment 4]

In the embodiment described above, a case in which a mode is controlled based on an identification result is described.

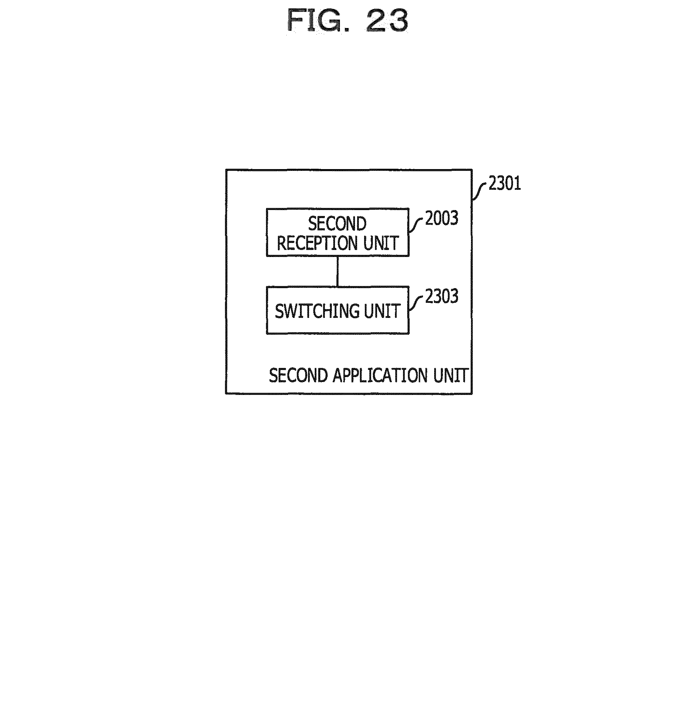

FIG. 23 illustrates a module configuration example of a second application unit 2301. The second reception unit 2003 is similar to the second application unit illustrated in FIG. 20. The second application unit 2301 has a switching unit 2303. When receiving a notice on a moving state, the switching unit 2303 switches from a first mode (for example, a normal mode) to a second mode (for example, power saving mode). When receiving a notice on a stationary state, the switching unit 2303 switches from the second mode to the first mode.

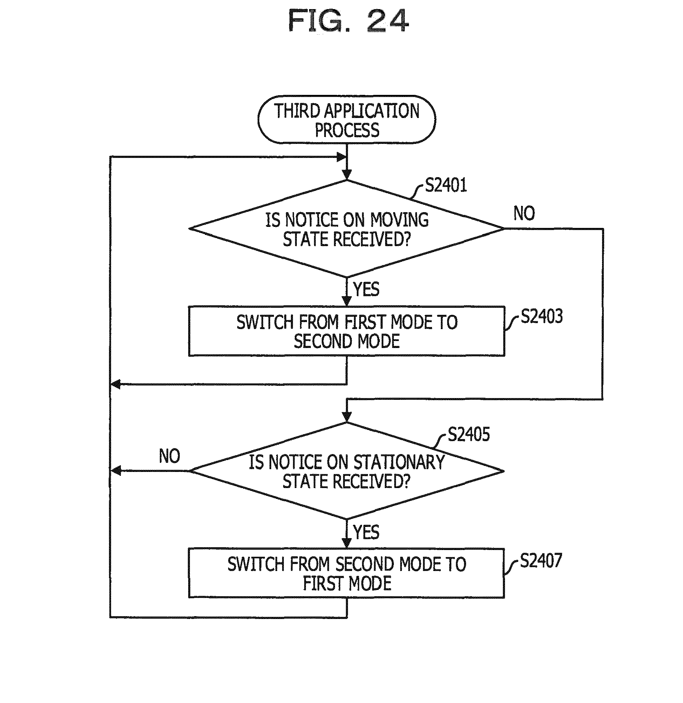

FIG. 24 illustrates an example of third application process flow. The second reception unit 2003 judges whether or not a notice on a moving state is received (S2401). If it is judged that the notice on the moving state is received, the switching unit 2303 switches from the first mode to the second mode (S2403). Then, the process returns to S2401.

On the one hand, if it is judged in S2401 that the notice on the moving state is not received, the second reception unit 2003 judges whether or not a notice on a stationary state is received (S2405). If it is judged that the notice on the stationary state is received, the switching unit 2303 switches from the second mode to the first mode (S2407). Then, the process returns to S2401.

If it is judged in S2405 that the notice on the stationary state is not received, the process returns to S2401.

According to the embodiment, for example, automatic switching to a mode suitable for a moving state is possible. Therefore, an operation to switch to the mode suitable for the moving state may be omitted.

Furthermore, automatic switching to a mode suitable for a stationary state is possible. Therefore, an operation to switch to the stationary mode may be omitted.

### [Embodiment 5]

While the case in which the mode is controlled based on the identification result is described in the embodiment 4, a case in which display of a screen is controlled based on an identification result is described in the embodiment 5.

Also in this embodiment, the second application unit 2301 performs an application process. A configuration of the second application unit 2301 is as illustrated in FIG. 23. However, when receiving a notice on a moving state, the switching unit 2303 switches display of a first screen (for example, menu screen) to display of second screen (for example, message screen). When receiving a notice on a stationary state, the switching unit 2303 switches from the display of second screen to the display of first screen.

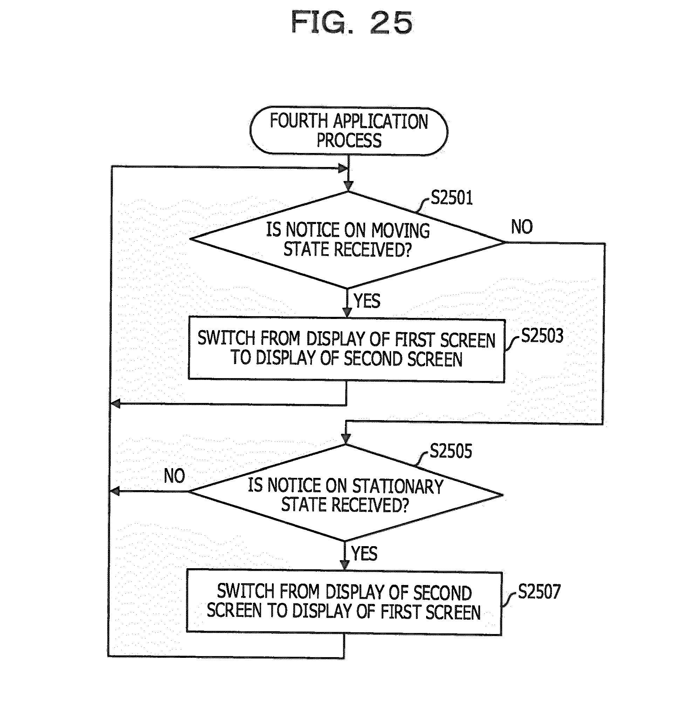

FIG. 25 illustrates an example of fourth application process flow. The second reception unit 2003 judges whether or not a notice on a moving state is received (S2501). If it is judged that the notice on the moving state is received, the switching unit 2303 switches from the display of first screen to the display of second screen (S2503). Then, the process returns to step S2501.

On the one hand, if it is judged in S2501 that the notice on the moving state is not received, the second reception unit 2003 judges whether or not a notice on a stationary state is received (S2505). If it is judged that the notice on the stationary state is received, the switching unit 2303 switches from the display of the second screen to the display of the first screen (S2507). Then, the process returns to step S2501.

If it is judged in S2505 that the notice on the stationary state is not received, the process returns to step S2501.

According to this embodiment, for example, automatic switching to display of a screen suitable for a moving state is possible. Therefore, an operation to switch to the display of the screen suitable for the moving state may be omitted.

Furthermore, for example, automatic switching to display of a screen suitable for a stationary state is possible. Therefore, an operation to switch to the display of the screen suitable for the stationary state may be omitted.

Although the embodiments of the present disclosure have been described above, the present disclosure is not limited to the embodiments. For example, the functional block configuration described above may not correspond to a program module configuration.

In addition, the configuration of each memory area described above is an example, and it does not mean that a configuration has to be the configuration described above. Furthermore, also in process flow, order of processes may be switched as far as a process result does not change. Furthermore, the processes may be executed concurrently.

A summary of the embodiments described above is as follows.

An electronic device of one aspect has a detection unit configured to detect magnetism that changes at a frequency higher than a first threshold, a first calculation unit configured to calculate a moving speed of the electronic device in a horizontal direction, and a judgment unit configured to judge that a user is moving when the calculated moving speed exceeds a second threshold and when magnitude of the detected magnetism exceeds a third threshold.

With this, any effect of magnetism (for example, earth magnetism) that is detected as a component of a frequency lower than the first threshold may be removed, and the state where the user is moving may be identified more correctly based on largeness of a change in magnetism received from the surroundings of the user.

Furthermore, the judgment unit may be configured to judge that the user is in a stationary state when magnitude of the change in the detected magnetism does not exceed the third threshold.

With this, any effect of magnetism (for example, earth magnetism) that is detected as a component of a frequency lower than the first threshold may be removed, and the state where the user is stationary may be identified more correctly based on smallness of a change in magnetism received from the surroundings of the user.

The above-mentioned electronic device may further have a sensor configured to measure magnetism. The detection unit may have a removal unit configured to remove a component of a frequency lower than the first threshold from first data of the measured magnetism. Furthermore, the detection unit may have a calculation unit configured to calculate an amount of change in magnetism based on second data on magnetism from which the component is removed.

With this, the amount of change in magnetism due to a frequency higher than the first threshold may be calculated relatively easily.

The detection unit may detect magnetism that changes at a frequency higher than the first threshold equal to or higher than a frequency of vibration in attitude change of the electronic device associated with handling of the user.

With this, an earth magnetism component in a normal usage aspect may be removed. Therefore, erroneous judgment due to the effect of earth magnetism may be reduced.

The detection unit may detect magnetism that changes at a frequency higher than the first threshold lower than a frequency of a commercial power supply.

With this, for example, based on any effect of electromagnetic wave generated from a power transmission line, a state where a user is moving may be judged.

The detection unit described above may detect magnetism that changes at a frequency higher than a first threshold lower than a frequency of electromagnetic wave generated from an operating escalator.

With this, based on the effect of electromagnetic wave generated from the operating escalator, the state where the user is moving may be judged.

The judgment unit described above may also judge that a calculated moving speed exceeds a second threshold representing a walking speed of a user at slow pace.

With this, erroneous judgment that the user is moving may be avoided for any movement slower than the walking speed of the user at slow pace.

The electronic device described above may further have a start unit configured to start a device when the user is judged as moving.

With this, a device to be used in a state where a user is moving, for example, may be automatically started. Therefore, an operation to start the device that is used in the state where the user is moving may be omitted.

The electronic device described above may further have a start unit configured to start a program when the user is judged as moving.

With this, the program used in the state where the user is moving, for example, may be automatically started. Therefore, an operation to start the program used in the state where the user is moving may be omitted.

The electronic device described above may further have a switching unit configured to switch a mode when the user is judged as moving.

With this, automatic switching to a mode suitable for the state where the user is moving is possible. Therefore, an operation to switch to the mode suitable for the state where the user is moving may be omitted.

The electronic device described above may have a switching unit configured to switch screen to be displayed when the user is judged as moving.

With this, automatic switching to the display of screen suitable for the state where the user is moving is possible. Therefore, an operation to switch to the display of the screen suitable for the state where the user is moving may be omitted.

In addition, a program configured to cause a processor to perform the processes described above may be created and stored in a computer readable storage medium or recording device such as a flexible disk, a CD-ROM, a magneto-optical disk, a semiconductor memory, a hard disk, or the like, for example. Note that in general, an intermediate process result is temporarily stored in a memory such as a main memory.

## Claims

1. An electronic device includes a computer processor, the device comprising:
a detection unit configured to detect magnetism that changes at a frequency higher than a first threshold;
a first calculation unit configured to calculate a moving speed of the electronic device in a horizontal direction; and
a judgment unit configured to judge that a user is moving when the calculated moving speed exceeds a second threshold and an amount of change in the detected magnetism exceeds a third threshold.

2. The device according to claim 1,
wherein the judgment unit is configured to judge that the user is in a stationary state when the amount of change in the detected magnetism does not exceed the third threshold.

3. The device according to claim 1 or 2, further comprising:
a sensor configured to measure magnetism;
wherein the detection unit comprises:
a removal unit configured to remove a component from first data of the measured magnetism, the component having a frequency lower than the first threshold; and
a second calculation unit configured to calculate the amount of change in the magnetism based on second data of the magnetism from which the component is removed.

4. The device according to any preceding claim,
wherein the detection unit is configured to detect magnetism that changes at a frequency higher than the first threshold equal to or higher than a frequency of vibration in attitude change of the electronic device associated with handling of the user.

5. The device according to any of claims 1 to 3,
wherein the detection unit is configured to detect magnetism that changes at a frequency higher than the first threshold lower than a frequency of a commercial power supply.

6. The device according to any of claims 1 to 3,
wherein the detection unit is configured to detect magnetism that changes at a frequency higher than the first threshold lower than a frequency of electromagnetic wave generated from an operating escalator.

7. The device according to any preceding claim,
wherein the judgment unit is configured to judge that the calculated moving speed exceeds a second threshold representing a walking speed of the user at a slow pace.

8. A movement judgment method comprising:
detecting magnetism that changes at a frequency higher than a first threshold;
calculating a moving speed of a target device in a horizontal direction; and
judging that a user is moving when the calculated moving speed exceeds a second threshold and when an amount of change in the detected magnetism exceeds a third threshold.

9. The method according to claim 8,
wherein the judging judges that the user is in a stationary state when the change in the detected magnetism does not exceed the third threshold.

10. The method according to claim 8 or 9,
wherein the detecting removes a component from first data of the measured magnetism, the component having a frequency lower than the first threshold, and calculates the amount of change in the magnetism based on second data of the magnetism from which the component is removed.

11. The method according to any of claims 8 to 10,
wherein the detecting detects magnetism that changes at a frequency higher than the first threshold equal to or higher than a frequency of vibration in attitude change of the electronic device associated with handling of the user.

12. The method according to any of claims 8 to 10,
wherein the detecting detects magnetism that changes at a frequency higher than the first threshold lower than a frequency of a commercial power supply.

13. The method according to any of claims 8 to 10,
wherein the detecting detects magnetism that changes at a frequency higher than the first threshold lower than a frequency of electromagnetic wave generated from an operating escalator.

14. The method according to any of claims 8 to 13,
wherein the detecting detects that the calculated moving speed exceeds a second threshold representing a walking speed of the user at a slow pace.

15. A non-transitory computer-readable medium that stores a movement judgment program for causing a computer to execute a process comprising:
detecting magnetism that changes at a frequency higher than a first threshold;
calculating a moving speed of a target device in a horizontal direction; and
judging that a user is moving when the calculated moving speed exceeds a second threshold and an amount of change in the detected magnetism exceeds a third threshold.
